# EUROPEAN PATENT APPLICATION

(11) **EP 0 579 422 A2**
(43) Date of publication of application: **19.01.1994**
(21) Application number: 93305190.6
(22) Date of filing: 01.07.1993
(51) Int. Cl.: A61C 7/36

(54) **Interarch orthodontic coil spring**

(30) Priority: 14.07.1992 US 913120
(71) Applicant: GAC International, Inc., Central Islip New York 11722 (US)
(72) Inventor: Miura, Fujio, Nerima Ku, Tokyo TO (JP); Kawaguchi, Kozo, Futaba-gun, Fukushima-Pref (JP)
(74) Representative: Bayliss, Geoffrey Cyril

(57) **Abstract**

An orthodontic coil spring (10) for imparting an interarch force is made from a super-elastic alloy wire (12) having been initially wound into an open coil and subsequently wound in the opposite direction of the initial winding into a closed coil for imparting a predetermined and substantially constant spring force upon slight deflection. The orthodontic coil spring defines an overall length (A) in its closed state so that upon installation in a patient's mouth the coil spring is prevented from being stretched more than approximately 150% of the overall length.

## Description

The present invention relates to orthodontic devices for correcting abnormal tooth alignment and, more particularly, to an improvement in orthodontic coil springs which are mounted on, and apply a force to appliances attached to a patient's teeth in order to correct abnormal tooth alignment.

Orthodontic clinicians have sought to apply interarch tension for a variety of reasons. These reasons, and the attendant uses to which the tension is put depend to a large extent upon the basic treatment philosophy of the clinician. Typical goals of applying interarch tension are stimulating growth, inducing incisor advancement, uprighting mandibular molars, and retracting the anterior segment of the maxillary arch.

Elastic circlets are widely known in the art and are commonly used to apply interarch forces to teeth in various ways. These elastics are available in various sizes and strengths and are generally made from latex. Elastics are typically coupled to an orthodontic appliance attached to the facial or lingual surface of a tooth, and are stretched and coupled to an orthodontic appliance attached to the facial or lingual surface of a tooth on the opposing arch. The elastics are usually attached on one end to a molar or posterior tooth, and on the other end to an anterior tooth. Orthodontic appliances often have integral posts, hooks, and/or tie wings designed specifically for the attachment of elastics. Alternatively, elastics may be attached to loops or hooks attached to the orthodontic arch wire which is normally coupled within the arch-wire grooves of the orthodontic appliances. These elastics are typically used to retract anterior teeth to close spaces posteriorly.

In order to be effective, however, elastics typically must be worn for at least twenty hours a day. Removal of tension for long periods of time allows a tooth to relapse into its former position and, as progress formerly made needs to be re-achieved, treatment time is extended. This, in turn, often strains doctor/patient relations. This problem is magnified by the inherent properties of elastics; tension exerted by elastics decreases rapidly after introduction into the oral environment. For this reason elastics should generally be changed about twice a day by the patient. However, even this is often not enough. It is believed that after less than two hours in an oral environment the tension exerted by a typical elastic is significantly reduced. Moreover, the application of interarch tension is most effective during a prolonged sleep. The inadequacies of elastics during an eight hour sleep, for example, are therefore magnified.

Another known method of treatment applies interarch tension with orthodontic coil springs. Until recently, orthodontic coil springs were typically manufactured from stainless steel. These types of coil springs have proven to be inadequate because the force exerted by a stainless steel spring varies over its range of extension. This often makes it difficult for the clinician to accurately control the interarch force applied to the appliance, and thus to the tooth itself throughout the entire treatment period. As a result, stainless steel springs typically need to be replaced several times during a treatment period, which requires time-consuming and expensive office visits by the patient.

The present invention is directed to an orthodontic coil spring for imparting an interarch force, comprising a wire made from a super-elastic alloy having been initially wound into an open coil and subsequently wound in the opposite direction of the initial winding into a closed coil for imparting a predetermined and substantially constant spring force upon slight deflection. The coil spring defines an overall length in its closed state so that upon installation in a patient's mouth the coil spring is prevented from being stretched more than approximately 150% of the overall length.

An orthodontic coil spring of the present invention is preferably made of a nickel-titanium alloy and the overall length of the coil spring is equal to approximately 30 mm. The orthodontic coil spring also includes means for attaching each end of the coil spring to either an orthodontic appliance or an arch wire. One orthodontic coil spring comprises a ligature wire coupled to one end of the coil spring for attaching the end of the coil spring to an orthodontic appliance mounted to a tooth. Another coil spring further comprises a fastener coupled to one end of the coil spring, and the fastener includes a portion to be crimped to an arch wire to attach the end of the coil spring to the arch wire. The orthodontic coil spring preferably also includes a tube portion for receiving the coil spring to prevent debris from collecting between the turns of the coil spring.

One advantage of the orthodontic coil spring of the present invention is that because the overall length of the coil spring prevents the coil spring from being stretched more than approximately 150% of the overall length, it is particularly durable and should last throughout the entire course of treatment for any patient. Another advantage of the orthodontic coil spring of the present invention is that because it is wound with initial tension, it can impart a substantially constant spring force upon slight deflection and throughout the entire movement of the teeth to which it is attached.

Other advantages of the orthodontic coil spring of the present invention will become apparent in view of the following detailed description and accompanying drawings.

Fig. 1 is a plan view of an interarch orthodontic coil spring embodying the present invention.

Fig. 2 is a plan view of another interarch orthodontic coil spring embodying the present invention.

Fig. 3 is a plan view of another interarch orthodontic coil spring embodying the present invention.

Fig. 4 is a side plan view illustrating the interarch orthodontic coil spring of Fig. 3 mounted within a typical patient's mouth.

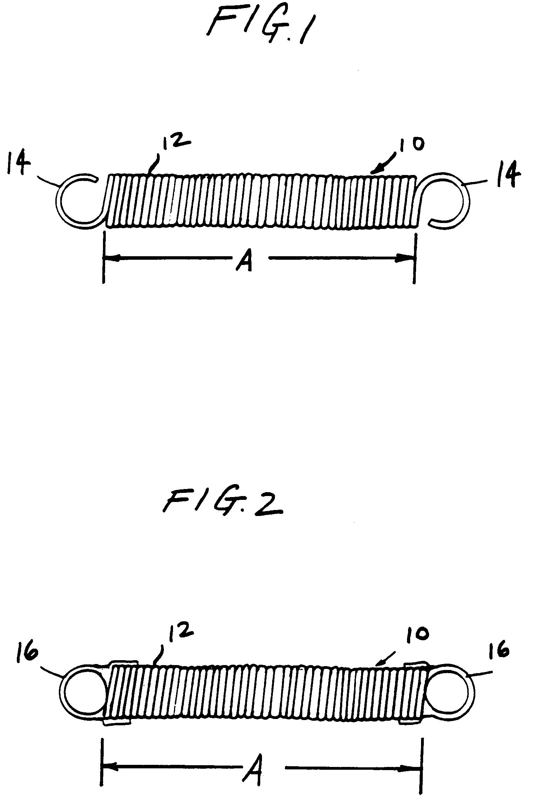

In Fig. 1 an interarch orthodontic coil spring embodying the present invention is indicated generally by the reference numeral 10. The coil spring 10 is formed of a shape-memory alloy wire, preferably nickel-titanium (NiTi), and is preferably manufactured with initial tension as explained in U.S. Patent No. 4,849,032 to Kawaguchi, which is hereby expressly incorporated by reference as part of the present disclosure. The wire 12 is first cut to an appropriate length and then wound into an open coil onto a core of a known coiling machine (not shown). The open coil is then heat treated at approximately 500°C into a super-elastic state for developing a predetermined spring force within a super-elastic zone of deflection of the coil. The coil spring is therefore typically heat treated for a time period within the range of 5 to 35 minutes. The spring force is preferably within the range of approximately 50 to 100 grams. Once heat treated, the open coil is then wrapped onto the core of the coiling machine in the opposite direction into a closed coil so that the spring 10 is formed into a closed contact shape. This two-step process causes the closed coil spring to be wound with initial tension (i.e., pretensioned) so that the coil spring 10 imparts a predetermined and substantially constant spring force upon even slight deflection. The ends of the coil spring 10 are then preferably formed into end hooks 14 for connecting the coil spring to other orthodontic appliances (not shown).

As shown in Fig. 2, the overall length A of the coil spring 10 in its closed state is equal to approximately 30 mm, but may change depending upon the dimensions of each particular patient's mouth. Because the coil spring 10 is used to apply an interarch force, it is stretched upon movement of one arch relative to the other by chewing, yawning or speaking, for example. An important feature of the present invention, however, is that once the coil spring 10 is installed in a patient's mouth, that its overall length A be sufficiently long so that when the coil spring is stretched, it is only elongated within a range of approximately 50 to 150% of its original length. It has been found that when the length A of the coil spring 10 is approximately 30 mm, this condition is satisfied. It is equally important, however, that the coil spring 10 be manufactured with the two-step winding process to exhibit initial tension as described above. In this way, although the coil spring 10 of the present invention is sufficiently long so that it can be stretched within a range of elongation of only approximately 50 to 150% of its original length, it is capable of imparting a substantially constant and predetermined spring force (preferably within the range of approximately 50 to 100 grams) upon only slight deflection, and throughout the entire range of elongation.

Because the coil spring of the present invention can only be stretched within a range of elongation equal to approximately 50 to 150% of its original length A, it is particularly durable and, as will be recognized by those skilled in the art, should last throughout the entire course of treatment for any patient. It has been determined that a typical interarch coil spring should be able to last approximately 3,000,000 cycles (i.e., each time the coil spring is stretched by chewing, yawning or speaking, for example, is a single cycle). However, when a super-elastic coil spring is continuously overstretched, for example, within a range of elongation equal to approximately 400 to 500% of its original length, the spring is likely to be subject to premature breakage. This type of failure can typically be caused by microscopic imperfections in the wire of the coil spring, which would otherwise not cause the coil spring to break unless continuously overstretched. Also, the stress and strain within a super-elastic coil spring is believed to increase substantially with increasing percentage of elongation. This type of failure can be extremely dangerous because it will occur while the appliance is installed in a patient's mouth, and obviously would make such a coil spring an unacceptable clinical tool. Thus, an advantage of the coil spring of the present invention is that because it is wound with initial tension, and is defined by an overall length A which permits the coil spring to be stretched only within a range of elongation equal to approximately 50 to 150% of its original length, it can impart its full predetermined and substantially constant spring force upon even a slight deflection and, moreover, last throughout the entire treatment period for the patient.

In Fig. 2, another orthodontic coil spring embodying the present invention is illustrated. The coil spring of Fig. 2 is substantially the same as the coil spring of Fig. 1, except that it includes eyelets 16 coupled to each end of the coil spring instead of end hooks 14 as illustrated in Fig. 1. The eyelets 16 are provided for coupling the ends of the coil spring 10 to posts, hooks, or other fixtures on orthodontic appliances.

In the use of each coil spring 10, one end of the coil spring is attached to an orthodontic appliance coupled to a tooth on the maxillary arch (not shown), and the other end of the coil spring is attached to an orthodontic appliance coupled to a tooth on the mandibular arch (not shown). The orthodontic appliances attached to the teeth typically include integral posts, hooks, or tie wings shaped for coupling to either the end hooks 14 or the eyelets 16 of a coil spring 10. The end hooks 14 or eyelets 16 of the coil springs 10 can typically be coupled directly to the appliances and, if necessary, secured by ligature or elastics. It should also be pointed out that the coil springs 10 can be coupled between the arches by other means, such as by being coupled on at least one end to a hook member attached to an arch wire.

As described above, the overall length A of the coil spring 10 of the present invention is suitably dimensioned so that it is prevented from being stretched more than approximately 50 to 150% of its original length upon installation in a patient's mouth. As also described above, in the illustrated embodiment of the present invention, this length A is equal to approximately 30 mm and the coil spring is manufactured to be pretensioned. In this way, the coil spring of the present invention can impart a predetermined and substantially constant interarch spring force throughout the entire duration of treatment and the entire range of tooth movement. Thus, unlike elastics and typical prior stainless steel coil springs, the orthodontic coil spring of the present invention can be attached to the orthodontic appliances and remain throughout the entire course of treatment, not requiring the patient to make adjustments (as with elastics), nor requiring the clinician to change the springs during treatment (as with stainless steel coil springs).

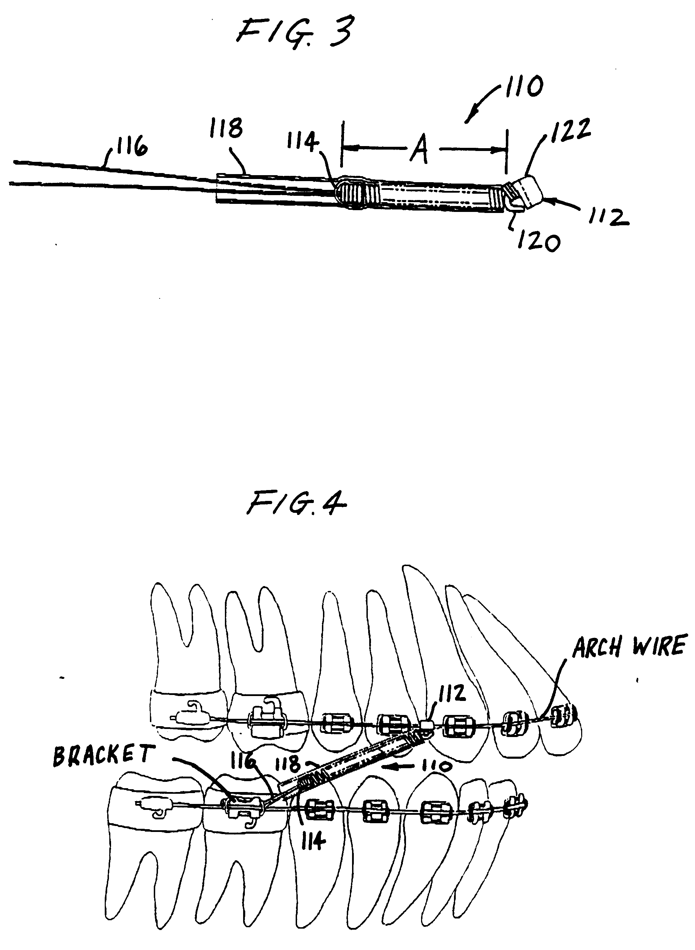

In Figs. 3 and 4 another interarch orthodontic coil spring embodying the present invention is indicated generally by the reference numeral 110. The coil spring 110 is formed of the same material and wound in the same manner as the coil spring 10 described above. The coil spring 110 includes a hook member 112 coupled to one end for attaching the coil spring 110 to an arch wire, as shown in Fig. 4. A fastener 112 of a type known in the art is coupled to the other end of the coil spring 110, and a ligature wire 116 is attached to the fastener 112 for attaching the other end of the coil spring 110 to the other arch, as also shown in Fig. 4. The windings of the coil spring 110 and at least a portion of the ligature wire 116 are preferably enclosed within a plastic tube 118 to prevent food particles or other debris form interfering with the operation of the coil spring.

As shown in Fig. 3, the hook member 112 includes a hook 120 for attaching the hook member to the windings of the coil spring 110. The base of the hook member 112 defines a U-shaped channel 122 for receiving an arch wire, as shown in Fig. 4. The base defining the U-shaped channel 122 is formed of a bendable metal which can be crimped over the arch wire with a pair of pliers or other suitable instrument to secure the hook member 112 to the arch wire. The ligature wire 116, on the other hand, is wrapped around the tie-wings of an orthodontic bracket mounted on the other arch, as also shown in Fig. 4. As will be recognized by those skilled in the art, the ligature wire 116 could equally be attached to a post, hook, arch-wire loop, or other known means for coupling such a wire to an arch to impart an auxiliary force to the arch.

The operation of the coil spring 110 of the present invention is hereinafter described with reference to Fig. 4. The coil spring 110 is mounted within a typical system of orthodontic appliances, wherein the orthodontic appliances are mounted on the teeth of each arch, and an arch wire is coupled to the appliances of each arch for imparting corrective forces to the arch. The hook member 112 is coupled to the arch wire of one arch by fitting the U-shaped channel 122 over the arch wire and crimping the hook member into engagement with the arch wire. The hook member 112 is preferably positioned to abut against the side of an orthodontic bracket to impart the force of the coil spring directly to the tooth. However, the hook member 112 can also be tightly crimped to the arch wire between two brackets to impart the force of the coil spring to the tooth through the arch wire. The ligature 116 is then wrapped around the tie-wings of an orthodontic bracket mounted on the other arch in a manner known to those skilled in the art.

The hook member 112 and the ligature wire 116 should prove to be particularly durable means for attaching the coil spring 110 to a patient's arches and for accurately imparting the force of the coil spring 110 to each arch. As with the coil spring 10 described above, the coil spring 110 is pretensioned and the overall length A of the coil spring is suitably dimensioned so that it is prevented from being stretched more than approximately 50 to 150% of its original length upon installation in a patient's mouth. In the embodiment of the present invention illustrated, the length A in Fig. 3 is equal to approximately 30 mm. The coil spring of the present invention should therefore prove to impart a substantially constant interarch spring force throughout the entire duration of treatment.

## Claims

1. An orthodontic coil spring for imparting an interarch force, comprising a wire made from a super-elastic alloy having been initially wound into an open coil and subsequently wound in the opposite direction of the initial winding into a closed coil for imparting a predetermined and substantially constant spring force upon slight deflection, and defining an overall length in its closed state so that upon installation in a patient's mouth the coil spring is prevented from being stretched more than approximately 150% of the overall length.

2. An orthodontic coil spring as defined in claim 1, wherein the super-elastic alloy is a nickel-titanium alloy.

3. An orthodontic coil spring as defined in claim 1, wherein the overall length of the coil spring is equal to approximately 30 mm.

4. An orthodontic coil spring as defined in claim 1, wherein the coil spring includes means for attaching each end of the coil spring to an orthodontic appliance or arch wire coupled to a tooth.

5. An orthodontic coil spring as defined in claim 4, wherein the means for attaching includes a hooked portion on at least one end of the coil spring.

6. An orthodontic coil spring as defined in claim 4, wherein the means for attaching includes an eyelet portion on at least one end of the coil spring.

7. An orthodontic coil spring as defined in claim 1, wherein upon installation, the coil spring is capable of being stretched within a range of elongation consisting of approximately 50 to 150% of the original length of the coil spring.

8. An orthodontic coil spring as defined in claim 1 having been heat treated at approximately 500°C after the initial winding and prior to the subsequent winding for imparting a substantially constant spring force throughout a super-elastic zone of deflection.

9. An orthodontic coil spring as defined in claim 1, further comprising a ligature wire coupled to one end of the coil spring for attaching the end of the coil spring to an orthodontic appliance mounted to a tooth.

10. An orthodontic coil spring as defined in claim 1, further comprising a fastener coupled to one end of the coil spring and including a portion to be crimped to an arch wire to attach the end of the coil spring to the arch wire.

11. An orthodontic coil spring as defined in claim 10, wherein the portion to be crimped defines a substantially U-shaped channel for receiving an arch wire and being crimped to the arch wire.

12. An orthodontic coil spring as defined in claim 1, further comprising a tube portion for receiving at least a portion of the coil spring to prevent debris from collecting between the turns of the coil spring.

13. An orthodontic coil spring for imparting an interarch force, comprising a super-elastic alloy wire wound into a closed coil and defining an overall length preventing the coil spring from being stretched more than approximately 150% of the overall length in a relaxed state upon installation between opposing arches in a patient's mouth.

14. An orthodontic coil spring as defined in claim 13, wherein the super-elastic alloy is nickel-titanium.

15. An orthodontic coil spring as defined in claim 13, wherein the coil spring has been initially wound into an open coil and then wound into the closed coil for imparting a predetermined and substantially constant spring force upon slight deflection.

16. An orthodontic coil spring as defined in claim 13, wherein the coil spring includes means for attaching each end of the coil spring to at least one of an orthodontic appliance and an arch wire coupled to a tooth.

17. An orthodontic coil spring as defined in claim 13, wherein upon installation, the coil spring is capable of being stretched within a range of elongation consisting of approximately 50 to 150% of the original length of the coil spring.

18. An orthodontic coil spring as defined in claim 13, further comprising a ligature wire coupled to one end of the coil spring for attaching the end of the coil spring to an orthodontic appliance mounted to a tooth.

19. An orthodontic coil spring as defined in claim 13, further comprising a fastener coupled to one end of the coil spring and including a portion to be crimped to an arch wire to attach the end of the coil spring to the arch wire.

20. An orthodontic coil spring as defined in claim 13, further comprising a tube portion for receiving at least a portion of the coil spring to prevent debris from collecting between the turns of the coil spring.

21. An orthodontic coil spring for imparting an interarch force, comprising a shape-memory alloy wire wound into a closed coil for imparting a predetermined and substantially constant spring force, a ligature wire coupled to one end of the coil spring for attaching the coil spring to an orthodontic appliance, and a fastener coupled to the other end of the coil spring for attaching the coil spring to an arch wire on the other arch.

22. An orthodontic coil spring as defined in claim 21, wherein the shape-memory alloy is nickel-titanium.

23. An orthodontic coil spring as defined in claim 21, wherein the coil spring has been initially wound into an open coil and then wound into the closed coil for imparting a predetermined and substantially constant spring force upon slight deflection.

24. An orthodontic coil spring as defined in claim 21, wherein upon installation, the coil spring is capable of being stretched within a range of elongation consisting of approximately 50 to 150% of the original length of the coil spring.
